Europäisches Patentamt

European Patent Office

Office européen des brevets

(19)

(11) Publication number: **0 030 646**

**B1**

(12)                    **EUROPEAN PATENT SPECIFICATION**

(45) Date of publication of patent specification: **21.03.84**    (51) Int. Cl.³: **B 65 H 3/00**

(21) Application number: **80107242.2**

(22) Date of filing: **20.11.80**

(54) **Document feed device.**

(30) Priority: **17.12.79 US 104636**

(43) Date of publication of application:
**24.06.81 Bulletin 81/25**

(45) Publication of the grant of the patent:
**21.03.84 Bulletin 84/12**

(84) Designated Contracting States:
**DE FR GB**

(56) References cited:
**US - A - 4 052 054**
**US - A - 4 143 960**
**US - A - 4 146 326**
**US - A - 4 203 585**

(73) Proprietor: **International Business Machines Corporation**
**Old Orchard Road**
**Armonk, N.Y. 10504 (US)**

(72) Inventor: **Hawley, Christopher**
**1930 Spruce Avenue**
**Longmont Colorado 80501 (US)**
Inventor: **Hayes, George Frederick**
**8410 N. 81st Street**
**Niwot Colorado 80544 (US)**
Inventor: **Konkle, Robert Ellyson**
**9893 Weld County Road II**
**Longmont Colorado 80501 (US)**
Inventor: **Shlatz, Myron Francis**
**4598 Tanglewood Trail**
**Boulder Colorado 80301 (US)**

(74) Representative: **Atchley, Martin John Waldegrave**
**IBM United Kingdom Patent Operations Hursley Park**
**Winchester, Hants, SO21 2JN (GB)**

Courier Press, Leamington Spa, England.

Document feed device

This invention relates to document feed devices and more particularly, but not exclusively, to document feed devices for use in copiers to feed original documents across a document glass platen at a copying station.

Many document copying machines require that a document be held in a stationary manner face down on a document glass in order to be copied. Frequently, in a copier of this type, it is necessary for the operator to place the document on the document glass manually. However, in some machines, the operator may feed documents onto the document glass by inserting them one at a time into an automatic feeding arrangement. Mechanisms of this type are known as semiautomatic document feeds (SADF). In other machines, the operator may place a stack of documents upon a feed tray from which they are automatically fed. Mechanisms of this second type are known as automatic document feeds (ADF).

Whether a semiautomatic document feed or an automatic document feed is used, it is necessary for some mechanism to move the paper across the document glass and register it accurately thereon for the copying operation. A common type of paper forwarding device is a belt located above the document glass, and one such is disclosed in US—A—4203585 and EP—A—00007455, published after the priority date of this application. While belt mechanisms of this type are in general use, they are difficult to adjust so as to provide accurate registration of documents and without accurate registration, information can be lost during the copying process. It has been found that when compliant rollers are used instead of belts as the paper forwarding mechanism, this problem is greatly reduced.

When compliant rollers such as rollers made from foraminous material are used as the document advancing mechanism in a document feed, a problem is presented in that the rollers must be precisely located in the vertical dimension relative to the horizontal document glass in order to perform the operation successfully. In order to obtain precise mounting, the roller drive shafts and bearing blocks must be solidly mounted on a platen cover at a precise distance above the glass. However, when rigid elements of this kind are interposed above the glass, further problems develop such as cracking of the glass when stray objects, such as pens, are inadvertently left on the glass when the rigid cover is closed. Also, since the typical document glass cover is hinged to pivot between open and closed positions, and may be subject to rough use by a variety of operators, the pivoting action of the cover can create accumulative stresses on the frame so that precision in mounting the rollers is lost after a period of use.

This invention seeks to provide a solution to these problems. Thus a document feed device for use with a document copier for moving documents to be copied across a document glass, comprising document forwarding means positioned above the document glass for moving documents across the glass and propelled by drive shafts is characterised by a mounting plate assembly upon which the document forwarding means and drive shafts are mounted stationary reference means for positioning the mounting assembly in a desired relationship above the document glass, and a frame means to which the mounting assembly is nonrigidly fastened to allow it to float therein.

When using a series of rollers to move paper across the document glass, complex drive problems result which may be accentuated by the need to position rollers at an angle to the drive direction in order to move the paper into a reference edge for proper positioning. This problem becomes even more severe when two documents are fed simultaneously onto the document glass with one document being positioned along a front reference edge and the second document positioned along a rear reference edge so that the two documents can be copied simultaneously such as described in U.S.—A—4,052,054, DE—A—2712143.3, FR—A—2345744 and GB—A—1535614. This problem is made more severe when large documents are to be copied and come under the influence of some rollers tending to position it along the front reference edge and others tending to position it along the rear reference edge.

This invention seeks to provide a simple drive for a series of rollers, and to overcome these positioning problems. From this aspect, a preferred embodiment of the invention comprises a document feed device as defined above and having rollers at each end of the shafts positioned at angles to the paper feed direction. Preferably, the angles are in opposite directions at each end of the shafts. Advantageously the angles at the one end of the shaft are the same and smaller than those at the other ends.

In the machine disclosed in US—A—4203585 and EP—A—00007455, the paper is registered on the platen against a positioning gate. At the conclusion of a copying process, when the gate is withdrawn so that the paper may be automatically expelled from the document glass, there is a tendency for the fingers of the gate to catch the paper as they retract; this is especially true of very lightweight paper.

It is therefore, another object of this invention to position paper on the platen so as to prevent jams in the positioning gate. From this aspect, a preferred embodiment of the invention comprises a document feed device as defined above where the document forwarding means first moves a document in the direction (P) of paper feed to a stationary position and then in a reverse direction to a registration position (R) for the commencement of the copying operation.

In an embodiment of the invention, a rigid platen cover including a metal plate, is precisely positioned to rest in a nonrigid manner above the front and rear reference edges of the document glass. The rigid plate carries paper forwarding means which is preferably an assembly of foraminous rollers and their drives which are positioned in precise relation to the surface of the document glass through their mount on the precisely located plate. Since the plate is made to float in a nonrigid manner on the front and rear reference edges, when stray objects are left on the document glass and the platen cover is closed onto the stray object, the plate may move upwardly without incurring device breakage, at least within the dimensions of floating movement.

Through the use of roller drive shafts with a precise curvature, the rollers may be positioned at an angle to the direction of paper movement in order to position the paper against the front and rear reference edges. In that manner, when two originals are fed simultaneously across the document glass, one may be positioned against the front reference edge while the second is positioned against the rear reference edge. When a large document is fed onto the document glass such that it is under the influence of those rollers tending to move documents into the front reference edge and also under the influence of those rollers tending to move documents into the rear reference edge, the large document is moved to a selected one of the two reference edges by positioning one set of rollers at a greater angle to the direction of paper movement than the other. This is accomplished by variation in shaft curvature.

A DC motor is mounted on the floating plate and is used to drive the foraminous rollers to move the paper across the document glass to the positioning gate. In order that paper is not caught within the fingers of the gate when it is withdrawn at the conclusion of a copying operation, the DC motor is reversed in direction in order to move the paper slightly away from the positioning gate to a registration position for the copying operation. Accuracy in positioning the paper to the registration position is maintained through use of a one-way clutch in conjunction with the DC motor.

The scope of this invention is defined by the appended claims; and how it can be carried into effect is hereinafter particularly described with reference to the accompanying drawings, in which:—

FIG. 1 is a perspective view of part of an automatic document feed and a document glass platen in a copier for use in conjunction with a document feed device according to the invention.

FIG. 2 is a side view of a document feed device according to the invention located on the document glass platen of a copier with an automatic document feed;

FIG. 3 is a perspective view partly broken away of the document feed device of Fig. 2; and

FIG. 4 is a schematic plan of the disposition of the rollers on the device of Fig. 3 in relation to the document glass platen.

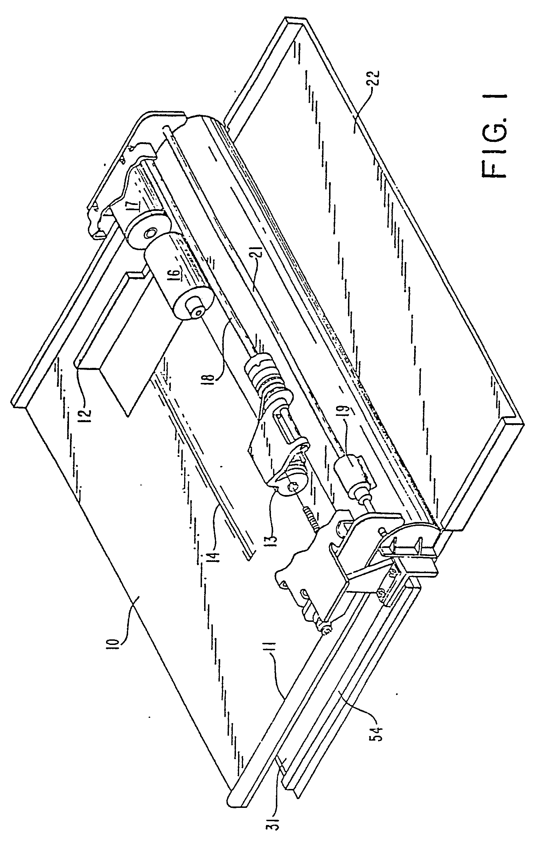

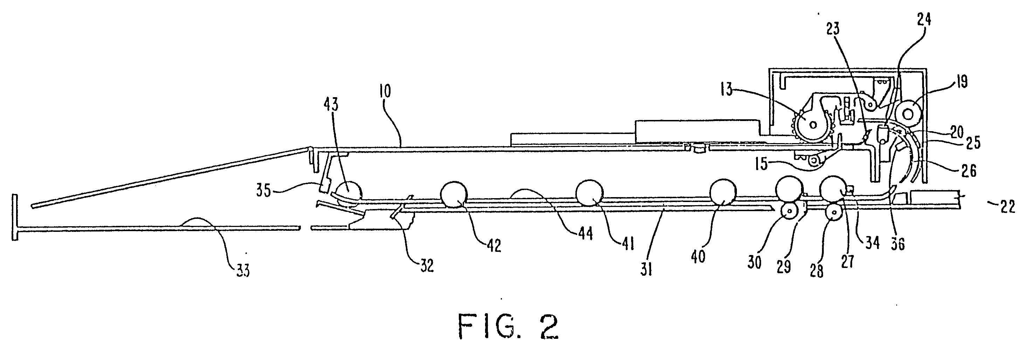

The embodiment of the invention to be described is used in conjunction with an automatic document feed mechanism similar to that disclosed in US—A—4203585 and EP—A—00007455. The mechanism includes a document tray 10 (Fig. 1) on which a stack of documents to be copied can be placed and aligned against a guide edge 11. A movable edge guide 12 may then be moved in track 14 to abut the edge of the document stack opposite to the guide 11. The front edge of the stack may then be engaged against a movable gate 15 (Fig. 2). The top document on the stack can be fed by lowering and rotating a wave generator wheel 13, after the gate 15 has been lowered. From the stack, it is guided onto a document glass platen 31. Alternatively, single documents can be placed on tray 22 and fed therefrom onto the platen 31.

The wheel 13 is mounted in a pivoted bracket which is spring biased to hold the wheel 13 clear of a stack on tray 10. A solenoid 16 is energisable to lower wheel 13 onto the top sheet of the document stack. A motor 17 is connected through gearing (not shown) to a shaft 18 and a shaft 21. The shaft 18 is connected by a belt (not shown) to drive the wheel 13 and the shaft 21 carries a nip roller 19.

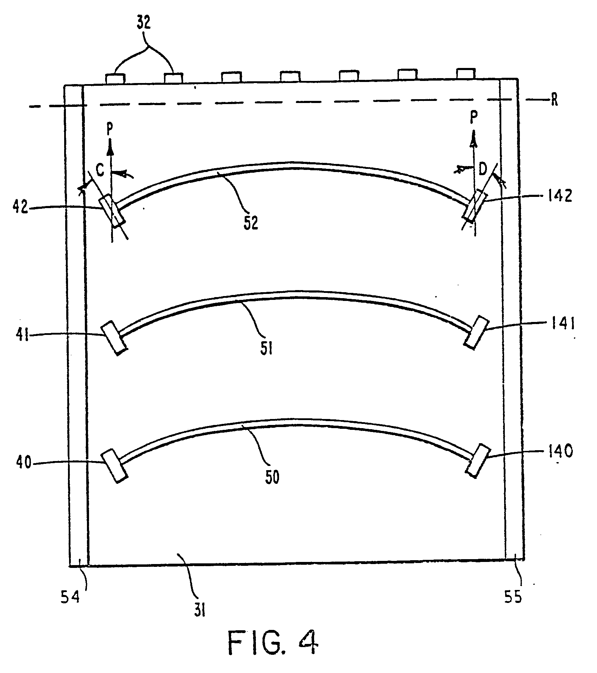

When a stack of documents has been positioned properly between the guides 11 and 12 and against the gate 15, the gate 15 is lowered. Thereafter, the wheel 13 is lowered by energisation of the solenoid 16 and driven by the motor 17. The topmost sheets of the stack are shingled off the stack up a ramp 23 (Fig. 2) to between a curved paper guide 25 and a restraint pad 24. The restraint pad 24 restrains all but the topmost sheet from passing and the top sheet enters the space between the curved guide 25 and a complementary curved paper guide 26. Within this space is the nip between driven roller 19 and a roller 20. Once the topmost sheet is within the nip of rollers 19 and 20, it is moved around the semi-circular bend formed by paper guides 25 and 26 and into the nip of a pair of aligning rollers 27 and 28. From there the paper passes over a retracted entry gate 29 into the nip of a pair of pinch rollers 30. These rollers move the paper onto the document glass platen 31, where motion across the glass is continued by a succession of compliant, foraminous rollers 40, 41 and 42. These rollers ultimately move the paper against a raised positioning gate 32. Then the rollers 40, 41 and 42 are reversed for a short time to move the document a slight distance away from the gate 32 to a registration position R (Fig. 4). After a copy has been made, the gate 32 (Fig. 2) is retracted and the rollers 40, 41 and 42 are driven again to move the document past foraminous rollers 43 to an exit tray 33.

If a single document is to be fed onto the platen 31, it is placed face down in the tray 22 and pushed forward into the nip of the aligning rollers 27 and 28 and against the raised entry gate 29. At the proper time, the gate 29 is retracted and the document is fed by rollers 27 and 28, pinch rolls 30 and foraminous rollers 40, 41 and 42 across the document glass 31 to the positioning gate 32. Then the rollers 40, 41 and 42 are reversed for a short time to move the document a slight distance away from the gate 32 to a registration position R (Fig. 4). After a copy has been made, the gate 32 (Fig. 2) is retracted and the rollers 40, 41 and 42 are driven again to move the document past foraminous rollers 43 to an exit tray 33.

As a single document is pushed from the tray 22 into the nip of aligning rollers 27 and 28, an entry sensor 34 registers the presence of the document and turns on a separate motor (not shown) to drive the aligning rollers 27 and 28. The aligning rollers are driven for sufficient time to enable the document to be registered against the raised entry gate 29. After registration and when the apparatus is ready to receive a document on the platen 31, the entry gate 29 is lowered by energisation of a solenoid (not shown) and the aligning rollers 27 and 28, the pinch rolls 30 and the foraminous rollers 40 to 43 are started. The document is then fed by these rollers from the entry tray 22 across the document glass platen 31. The aligning rollers are stopped and the entry gate 29 is reset by the trailing edge of the document being sensed by the entry sensor 34. Meanwhile, the foraminous rollers continue running for sufficient time to feed the document to the positioning gate 32, whereupon the rollers 40 to 43 are reversed for a short time to back the document to the registration position R (Fig. 4).

Either after the document hs been imaged or during the copying process, the gate 32 is dropped by a solenoid (not shown). After imaging is complete, the foraminous rollers 40 to 43 are restarted to feed the document into the exit tray 33.

When the automatic document feed is to be used, a stack of documents is placed face up onto the tray 10 and pushed against the gate 15. This activates an ADF switch (not shown). Feeding of the documents is initiated when the operator presses a machine start button. Because the ADF switch has been activated, machine logic is enabled to discriminate between ADF operating mode and manual mode and thus the need for the special ADF mode start button is eliminated.

Upon this initiation of document feeding, the gate 15 is dropped by solenoid action and the motor 17 is turned on. This motor drives both the wave generator wheel 13 and the nip roller 19. Shingler solenoid 16 is energized to cause the wheel 13 to drop onto the paper stack and feed the top sheet of the stack into the nip of rollers 19 and 20. A paper sensor 36 is located beyond the nip and when paper is sensed there, dynamic braking is applied to the motor 17 thus stopping the motor quickly. The wheel 13 is lifted from the document stack by de-energizing solenoid 16, the motor 17 is restarted together with the aligning roller motor. The entry gate 29 and exit gate 32 drop and the motor driving the foraminous rollers is also started. The exit gate 32 is restored after a short preset time interval, during which any document inadvertently left on platen 31 is allowed to leave the platen. Motor 17 drives the nip roller 19 to feed the top document through the space between the guides 25 and 26 to the aligning rollers 27 and 28. As the document leading edge makes the entry sensor 34, a timer is set to stop the foraminous roller motor after a time delay just long enough to allow the document to have reached the positioning exit gate 32, whereupon the foraminous roller motor is reversed to back the document a slight distance away from gate 32 to the registration position R (Fig. 4). When the document trailing edge moves past nip sensor 36, the solenoid 16 is energised to drop the wheel 13 onto the paper stack to feed the next document into the nip of the rollers 19 and 20. As the document passes from the nip, it is sensed by the sensor 36 and the motor 17 is dynamically braked and the wheel 13 lifted from the stack by de-energisation of the solenoid 16. When the top document trailing edge passes the entry sensor 34, the aligning rollers 27 and 28 are stopped and the entry gate 29 is restored.

After the top document is imaged for copying, the exit gate 32 is dropped and the foraminous roller drive is restarted to move the document from the platen 31. As the document leading edge reaches an exit sensor 35, the motor 17 and the aligning roller motor are restarted. The entry gate 29 is dropped and the second document is fed between the guides 25 and 26 to repeat the cycle. The exit gate 32 is closed after a preset time interval and the foraminous rollers are run for a sufficient time to enable the second document on platen 31 to reach the gate 32 and then be drawn back into registration.

These steps continue to be repeated until the last document in the stack has been copied and ejected. Control circuits which may be used to perform these operations are disclosed in US—A—4203585 and EP—A—00007455.

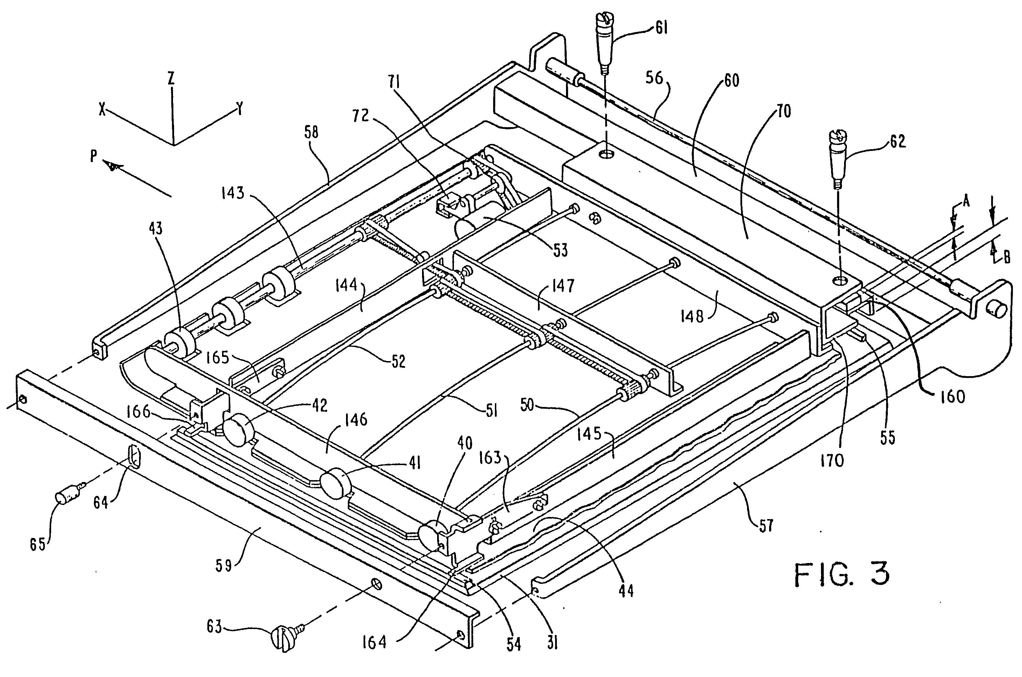

In the present embodiment of this invention, the device which feeds documents across the glass platen includes a floating plate assembly (Fig. 3).

The plate assembly includes a plate 44, which in the operative position is spaced above the glass platen 31. The plate 44 has a plurality of L-shaped brackets 144, 145, 146, 147 and 148 on its upper surface. The platen 31 has front and rear reference edges 54 and 55 mounted thereon, on either side of the paper path which is in the direction of the arrow P. Brackets 163 and 165, secured to the front ends of the brackets 145 and 144, respectively, have projecting fingers 164 and 166, respectively, which engage the reference edge 54 in the operative position of the plate assembly to hold the front of the plate assembly at a predetermined distance from the platen 31. A channel-shaped bracket 70 is secured to the bracket 148 and has a projecting lower limb 170 which engages the reference edge 55 in the operative position of the plate assembly to hold the rear of the plate assembly at a predetermined distance form the platen 31.

The foraminous rollers 40, 41 and 42 are mounted at one side of the plate assembly upon the ends of shafts 50, 51 and 52, respectively. The shafts are mounted in bearings in the brackets 146, 147 and 148 so as to be bent and carry rollers (not shown) similar to rollers 40, 41 and 42 at their other ends. Three rollers 43 are mounted on a straight shaft 143 journaled in the brackets 146 and 148. The shafts 50, 51, 52 and 143 are interconnected by a belt and pulley transmission through a one-way clutch 71 to a reversible DC motor 53 carried on the bracket 144. The plate assembly is mounted in a pivoted frame which supports the ADF mechanism shown in Fig. 1. The frame comprises four arm members 57, 58, 59 and 60 which are pivotally mounted in the copier to rotate around a torsion bar 56 from an open to a closed position.

The arm member 60 carries adustable nut plates 160 into which are secured locating pins 61 and 62 passing through holes in the upper limb of the bracket 70. Adjustment of these nut plates allows the plate 44 to be positioned accurately on the reference edges in the X and Y directions. After the nut plates are secured, the pins allow movement of the plate 44 in the Z direction.

A shoulder screw 63 passes through a hole in the arm member 59 and is secured in a nut portion of the bracket 163. This permits pivoting of the floating plate assembly about the screw 63. A pin 65 passes through a slot 64 in the arm member 59 and is secured in a nut portion of the bracket 165. This allows the finger 166 of the bracket 165 to rest upon the reference edge 54 with the pin 65 in the middle of the slot 64, so that the plate 44 can pivot relative to the frame about the screw 63, both up and down, with the pin 65 relatively movable in the Z direction. The plate 44 is torsionally resilient.

Because the top surfaces of the front and rear reference edges 54 and 55 define an exact dimension above the document glass platen 31, the floating plate assembly resting on these edges provides a precisely defined clearance between the glass platen 31 and the lower surface of the plate 44. This clearance provides for the reception of documents and for precise positioning of the foraminous rollers relative to the document glass platen.

The feed plate assembly is allowed within limits to float within the rectangular frame which carries it and is thereby isolated from frame stress caused by the pivoting hinge system which must also counter-balance the weight of the ADF carried by the frame. When the frame is lifted to pivot around the torsion bar 56, the front left corner of plate 44 sags down in the Z direction relative to the front right corner, because of its weight and the weight of the roller drive which it carries. The amount of movement is limited by the slot 64. This limited relative movement protects the assembly from distortion, which would affect its later seating relative to the glass, due to frame abuse. The rear portion of the plate 44 stays on the surface of the rear reference edge 55 until the nut plates 160 on the arm member 60 have moved up a distance A in the Z direction to engage the upper limb of the bracket 70.

A further degree of protection to the relationship between the document glass platen 31 and the plate assembly is provided against the following situation. If an object, such as a pencil or a pen is inadvertently left on the rear portion of document glass platen 31 close to the hinge of the frame, prior to closing the frame, then when the operator closes the frame, the operator may not feel the object owing to the leverage involved. The result could be a cracked document glass platen or a damaged frame assembly. Objects left at the front of the glass are not as likely to cause damage owing to the fact that there is much less mechanical advantage under these circumstances. To guard against the situation where something is left near the rear reference edge 55, the rear portion of plate 44 can float upwardly a maximum distance B until the lower limb 170 of the bracket 70 engages the nut plates 160. Thus, the plate 44 floats on both the left and right rear sides and on the left front side of the frame. The plate 44 is solidly attached to the frame only at the right front side by the screw 63.

The foraminous rollers 40, 41 and 42 (Fig. 4) are disposed at an angle C to the paper feed direction P at the ends of the curved shafts 50, 51 and 52. The degree of inclination is a matter of choice, but is preferably 5 degrees in order to move a document on the platen 31 towards the front reference edge 54.

Rear foraminous rollers 140, 141 and 142 near the rear reference edge 55 at the other ends of the shafts 50, 51 and 52 are also inclined to the paper feed direction but in the opposite direction at an angle D, so that they act to move a document towards the rear reference edge 55. Preferably the rear foraminous rollers are positioned at a smaller angle to the paper feed direction P than the front rollers to ensure the positioning of a large single original document to the front reference edge, even though it is wide enough to be acted upon by both front and rear rollers during its passage across document glass 31 to the positioning gate 32. Therefore, if the angle C of the front rollers is 5 degrees, the rear rollers are positioned at an angle D of 3 degrees to accomplish fron edge referencing. In this manner, a very simple drive involving curved shafts is provided to solve an accumulation of problems.

As previously mentioned, the documents to be copied are moved to positioning gate 32 and then backed away slightly from that gate to registration position R by operating motor 53 in reverse. To ensure an exact distance for the backup operation, the one-way clutch 71 is provided. Clutch 71 has no effect on forward motion, but has one member which is allowed only a restricted movement between the legs of a fixed U-shaped member 72 in the reverse direction. Thus when the member has undergone such movement, the document has been withdrawn from the gate 32 to position R and the clutch 71 releases the drive between the motor 53 and the shaft 143.

While the invention has been particularly shown and described with reference to a preferred embodiment thereof, it will be understood by those skilled in the art that the foregoing and other changes in form and details may be made therein without departing from the scope of the invention as defined in the following claims.

## Claims

1. A document feed device for use with a document copier for moving documents to be copied across a document glass, comprising document forwarding means positioned above the document glass (31) for moving documents across the glass and propelled by drive shafts (50, 51, 52), characterised by a mounting plate assembly (44) upon which the document forwarding means and drive shafts are mounted, stationary reference means (54,55) for positioning the mounting assembly in a desired relationship above the document glass, and a frame means (57,58,59,60) to which the mounting assembly is nonrigidly fastened to allow it to float therein.

2. A device according to claim 1, in which the frame means is pivoted to be movable from an open position to a closed position, in which the mounting assembly is positioned upon the reference means.

3. A device according to claim 2 in which the mounting assembly is fastened with lost motion fastened to the frame means along the edge of the mounting assembly closest to the pivotal axis of the frame means.

4. A device according to any preceding claim, in which the drive shafts are connected to a motor (53) mounted on the mounting assembly.

5. A device according to any preceding claim, in which the said paper forwarding means includes compliant roller means (40,41,42).

6. A device according to claim 5, in which the drive shafts are curved in order to position the roller means at an angle to the paper feed direction.

7. A device according to claim 6, in which the roller means comprises rollers (40,140,41,141,42,142) positioned at the opposite ends of each curved shaft so that the roller (40,41,42) at a first end of the curved shaft is positioned at a first angle (C) to the paper feed direction, so as to move a document against a first reference edge (54) positioned parallel to the direction of paper feed, while the roller (140,141,142) at a second end of the curved shaft is positioned at a second angle (D) to the paper feed direction so as to move a document against a second reference edge (55) positioned parallel to the direction of the paper feed (Fig. 4).

8. A device according to claim 7, in which the second angle (D) is more acute than the first angle (C) so that a single large document under the influence of both first and second rollers is positioned against the first reference edge (54).

9. A device according to any preceding claim, in which the document forwarding means first moves a document in the direction (P) of paper feed to a stationary position and then in a reverse direction to a registration position (R) for the commencement of the copying operation.

10. A device according to claim 9, in which the stationary position is defined by a removable gate (32).

## Revendications

1. Un dispositif d'ammenée de documents destiné à être utilisé avec une copieuse de documents pour faire défiler des documents à copier d'un bord à l'autre d'une glace à documents, comprenant des moyens d'avance des documents, positionnés au-dessus de la glace à documents (31) pour faire défiler les documents d'un bord à l'autre de la glace et propulsés par des arbres d'entraînement (50,51,52), caractérisé par un ensemble formant plaque de montage (44) sur lequel les moyens d'avance de documents et les arbres d'entraînement sont montés, des moyens de référence stationnaires (54,55) servant à positionner l'ensemble de montage dans une position relative désirée au-dessus de la glace à document, et des moyens formant châssis (57,58,59,60) auxquels l'ensemble de montage est fixé non rigidement pour lui permettre de flotter dans ces moyens formant châssis.

2. Un dispositif selon la revendication 1 dans lequel les moyens formant châssis sont montés pivotants pour pouvoir être déplacés d'une position ouverte à une position fermée, dans laquelle l'ensemble de montage est positionné sur les moyens de référence.

3. Un dispositif selon la revendication 2 dans lequel l'ensemble de montage est fixé avec fixation à course à vide aux moyens formant châssis le long du bord de l'ensemble de montage le plus proche de l'axe de pivotement des moyens formant châssis.

4. Un dispositif selon l'une des revendications précédentes dans lequel les arbres d'entraînement sont reliés à un moteur (53) monté sur l'ensemble de montage.

5. Un dispositif selon l'une des revendications précédentes dans lequel les moyens d'avance du papier comprennent des moyens formant rouleaux souples (40,41,42).

6. Un dispositif selon la revendication 5 dans lequel les arbres d'entraînement sont courbes pour positionner les moyens formant rouleaux en formant un angle par rapport à la direction d'amenée du papier.

7. Un dispositif selon la revendication 6 dans lequel les moyens formant rouleaux comprennent des rouleaux (40,140,41,141,42,142) positionnés aux extrémités opposées de chaque arbre courbe de manière que le rouleau (40,41,42) prévu à une première extrémité de l'arbre courbe soit positionné en formant un premier angle (C) par rapport à la direction d'amenée du papier, de façon à déplacer un document contre un premier bord de référence (54) positionné parallèlement à la direction d'amenée du papier tandis que le rouleau (140,141,142) prévu à la deuxième extrémité de l'arbre courbe est positionné en formant un deuxième angle (D) avec la direction d'amenée du papier de manière à pousser un document contre un deuxième bord de référence (55) positionné parallèlement à la direction d'amenée du papier (Figure 4).

8. Un dispositif selon la revendication 7 dans lequel le deuxième angle (D) est plus aigu que le premier angle (C), de manière qu'un unique document de grand taille soit positionné contre le premier bord de référence (54) sous l'influence des premier et deuxième rouleaux.

9. Un dispositif selon l'une des revendications précédentes dans lequel les moyens d'avance des documents déplacent tout d'abord un document dans la direction (P) d'amenée du papier jusqu'à une position fixe, puis dans le sens inverse jusqu'à une position de repérage (R) pour le commencement de l'opération de copiage.

10. Un dispositif selon la revendication 9 dans lequel la position stationnaire est définie par une barrière amovible (32).

**Patentansprüche**

1. Dokumentenvorschubvorrichtung zur Verwendung bei einem Dokumentenkopiergerät für die Bewegung von zu kopierenden Dokumenten über ein Dokumentenglas, welche über dem Dokumentenglas (31) angeordnete Dokumentenweiterführungsmittel, die Dokumente über die Glasplatte bewegen und durch Antriebswellen (50, 51, 52) angetrieben werden, aufweist, gekennzeichnet durch einen Anbringungsplattenaufbau (44), auf welchem die Dokumentenweiterführungsmittel und Antriebswellen angebracht sind, stationäre Bezugsmittel (54, 55) zur Anordnung des Anbringungsaufbaus in einer gewünschten Beziehung über dem Dokumentenglas und Rahmenmittel (57, 58, 59, 60), an welchen der Anbringungsaufbau nichtstarr befestigt ist, so daß er sich darin relativ dazu bewegen kann.

2. Vorrichtung nach Anspruch 1, bei welcher die Rahmenmittel für eine Bewegbarkeit aus einer offenen Stellung in eine geschlossene Stellung, in welcher der Anbringungsaufbau auf den Bezugsmitteln angeordnet ist, angelenkt ist.

3. Vorrichtung nach Anspruch 2, bei welcher der Anbringungsaufbau mit Spiel an den Rahmenmitteln längs der der Schwenkachse der Rahmenmittel nächsten Kante des Anbringungsaufbaus befestigt ist.

4. Vorrichtung nach irgendeinem vorstehenden Anspruch, bei welcher die Antriebswellen mit einem auf dem Anbringungsaufbau angebrachten Motor (53) verbunden sind.

5. Vorrichtung nach irgendeinem vorstehenden Anspruch, bei welcher die Papierweiterführungsmittel nachgiebige Rollenmittel (40, 41, 42) aufweisen.

6. Vorrichtung nach Anspruch 5, bei welcher die Antriebswellen gekrümmt sind, um die Rollenmittel in einem Winkel zur Papiervorschubrichtung anzuordnen.

7. Vorrichtung nach Anspruch 6, bei welcher die Rollenmittel an gegenüberliegenden Enden einer jeden gekrümmten Welle angeordnete Rollen (40, 140, 41, 141, 42, 142) umfassen so daß die Rolle (40, 41, 42) an einem ersten Ende der gekrümmten Welle unter einem ersten Winkel (C) zur Papiervorschubrichtung angeordnet ist, derart daß ein Dokument gegen eine parallel zur Papiervorschubrichtung angeordnete erste Bezugskante (54) bewegt wird, während die Rolle (140, 141, 142) an einen zweiten Ende der gekrümten Welle unter einem zweiten Winken (D) zur Papiervorschubrichtung angeordnet ist, derart daß ein Dokument gegen eine parallel zur Papiervorschubrichtung angeordnete zweite Bezugskante (55) bewegt wird (Fig. 4).

8. Vorrichtung nach Anspruch 7, bei welcher der zweite Winkel (D) spitzer als der erste Winkel (C) ist, so daß eine einzelnes großes Dokument unter dem Einfluß sowohl der ersten als auch der zweiten Rolle gegen die erste Bezugskante (54) angeordnet wird.

9. Vorrichtung nach irgendeinem vorstehenden Anspruch, bei welcher die Dokumentenweiterführungsmittel ein Dokument zuerst in Papiervorschubrichtung (P) in eine stationäre Lage und dann in eine umgekehrte Richtung in eine Registerlage (R) für den Beginn des Kopiervorgangs bewegen.

10. Vorrichtung nach Anspruch 9, bei welcher die stationäre Lage durch eine entfernbare Schranke (32) bestimmt ist.

FIG. 1

FIG. 2

FIG. 3

0 030 646

FIG. 4